# FASCICULE DE BREVET EUROPEEN

(11) **EP 2 962 658 B1**
(45) Date de publication et mention de la délivrance du brevet: **11.12.2019**
(21) Numéro de dépôt: 15175486.8
(22) Date de dépôt: 06.07.2015
(51) Int. Cl.: A61C 13/00, A61C 13/12, B23B 31/107

(54) **MACHINE À COMMANDE NUMÉRIQUE POUR, NOTAMMENT, LA RÉALISATION DE COURONNNES DENTAIRES ET AUTRES PROTHÈSES DENTAIRES**
MASCHINE NUMERISCHER STEUERUNG, INSBESONDERE FÜR DIE HERSTELLUNG VON ZAHNKRONEN UND ANDEREN ZAHNPROTHESEN
DIGITALLY CONTROLLED MACHINE FOR, IN PARTICULAR, THE PRODUCTION OF DENTAL CROWNS AND OTHER DENTAL PROSTHESES

(30) Priorité: 04.07.2014 FR 1456503
(43) Date de publication de la demande: 06.01.2016
(73) Titulaire: MECANUMERIC, 81150 Marssac-sur-Tarn (FR)
(72) Inventeur: BAUX, Nicolas, 81150 ROUFFIAC (FR)
(74) Mandataire: Ipside

(56) Documents cités:
- WO-A1-02/36035
- WO-A1-96/05781
- US-A- 5 013 194
- US-A1- 2007 111 640
- US-A1- 2011 098 165
- US-B1- 7 140 817

## Description

### Domaine technique.

La présente invention est du domaine des matériels utilisés notamment pour la réalisation, par enlèvement de matière à l'aide d'outils coupants ou d'outils abrasifs, de couronnes dentaires et autres prothèses médicales de restaurations dentaires. En particulier l'invention se rapporte à une machine à commande numérique selon le préambule de la revendication 1.

Une telle machine est connue du document WO 02/36035 A1.

### État de la technique antérieure.

Typiquement, les prothèses dentaires, telles que couronnes dentaires et autres, sont usinées dans un bloc de céramique généralement de forme parallélépipédique. Ce bloc de céramique est doté d'une queue métallique de préhension par lequel il est immobilisé dans le mandrin porte-pièce d'une machine à commande numérique dédiée apte à usiner ce bloc par enlèvement de matière à l'aide d'un outil abrasif ou d'un outil coupant du type fraise par exemple.

On connaît de la demande US 2007/0111640 (D4D TECHNOLOGIES) une machine comportant deux broches porte-outil, horizontales qui peuvent être coaxiales ou décalées latéralement et un mandrin porte-pièce, vertical. Les broches porte-outil sont entraînées en rotation selon leur axe géométrique longitudinal, lequel est horizontal et sont déplaçables en translation le long de cet axe géométrique longitudinal. Le mandrin porte-outil est déplaçable en translation selon un axe géométrique vertical et selon un axe géométrique horizontal perpendiculaire à l'axe géométrique horizontal de déplacement en translation de chaque broche. La queue de préhension de la pièce à usiner est dotée d'une rainure rectiligne s'étendant de manière perpendiculaire à son axe géométrique longitudinal. Le mandrin porte-pièce est doté d'un mécanisme d'ablocage formé essentiellement d'une came apte à coopérer en emboîtement de forme avec la rainure formée dans la queue de préhension. Cette came comporte une tête de manœuvre en creux manœuvrable manuellement par l'utilisateur à l'aide d'une clé.

On connaît aussi du brevet EP 455 853 (SIEMENS) un dispositif pour la fabrication de prothèses médicales, en particulier de prothèses dentaires mettant en œuvre un mandrin porte-pièce et deux broches porte-outil disposées en vis-à-vis l'une de l'autre. La pièce à usiner comporte toujours une queue de préhension par laquelle elle est immobilisée dans le mandrin porte-pièce par un mécanisme d'ablocage interne à ce mandrin. Le mécanisme d'ablocage comporte des billes, retenues par un anneau élastique, prévues pour être engagées en position d'ablocage dans une gorge continue formée dans la queue de préhension. En vue de la libération de la pièce, le mandrin porte-pièce est rétracté pour amener la queue de préhension, par son extrémité libre, en appui contre une broche d'extraction 24 interne au mandrin.

On connaît également de la demande WO02/36035 une machine à commande numérique pour l'usinage d'une pièce à usiner selon la forme d'une pièce d'origine. Cette machine à commande numérique comprend deux moyens de capture de la forme de la pièce d'origine, associés respectivement à une broche porte-outil et à un disque d'usinage aptes à usiner la pièce à usiner selon la forme de la pièce d'origine scannée. La pièce à usiner est maintenue en position, par des moyens de fixation, sur un mandrin porte pièce.

On connaît aussi des machines dont le mécanisme d'ablocage, rapporté sur le mandrin, est doté de billes et d'une bague moleté comportant un cône prévu pour venir repousser et maintenir les billes dans la gorge de la queue de préhension de la pièce à usiner. La manœuvre de la bague moletée est opérée manuellement par l'utilisateur, à l'aide d'une poignée de verrouillage.

Pour d'autres machines la manœuvre du mécanisme d'ablocage dans le sens du serrage de la queue de préhension dans le mandrin est opérée par l'utilisateur à l'aide d'un mécanisme dynamométrique.

Ces opérations de manœuvre du mécanisme d'ablocage sont opérées manuellement dans le volume d'une chambre d'usinage relativement exigüe. Pour cette raison, elles sont mal aisées à effectuer et sont génératrices de perte de temps. Par ailleurs, en raison de la proximité des outils d'usinage, elles accroissent les risques de blessures. Enfin elles peuvent faire appel à l'utilisation de mécanisme plus ou moins complexes pour la manœuvre du mécanisme d'ablocage.

### Exposé de l'invention.

Le but de la présente invention est de pallier les inconvénients précédemment exposés en facilitant la mise en place et la fixation de la pièce à usiner dans le mandrin porte-pièce et en faciliter le retrait et ce sans ajout d'accessoires annexes et sans intervention manuelle sur le mécanisme d'ablocage en vue de l'immobilisation ou de la libération de la pièce.

Un autre but de la présente invention est d'utiliser le mouvement de translation du mandrin pour effectuer les opérations de blocage et déblocage de la pièce.

À cet effet, l'invention a pour objet une machine à commande numérique selon la revendication 1, pour l'usinage d'une pièce sous forme d'ébauche, pourvue d'une queue de préhension, ladite machine comprenant, un bâti, une chambre d'usinage, au moins une broche porte-outil et au moins un mandrin porte-pièce porté par un chariot monté sur des glissières de guidage, fixées au bâti, ledit chariot étant déplaçable en translation le long des glissières par un ensemble moteur solidaire du bâti, ladite machine comportant une chambre d'usinage dans laquelle pénètre la broche porte outil et le mandrin porte pièce, et le mandrin porte-pièce comprend :
- un arbre porte-pièce dont la partie avant est dotée d'un alésage borgne axial prévu pour recevoir la queue de préhension que comporte la pièce à usiner, ledit alésage borgne s'étendant dans l'arbre porte pièce depuis l'extrémité avant dudit arbre,
- un fourreau engagé de manière mobile en translation sur ledit arbre porte-pièce et s'étendant sur la partie avant dudit arbre porte-pièce,
- un mécanisme d'ablocage disposé dans la partie avant du fourreau et dans la partie avant de l'arbre porte-pièce, lequel mécanisme d'ablocage est prévu pour agir en serrage dans l'alésage borgne de l'arbre porte-pièce, sur la queue de préhension de la pièce pour assurer la fixation de cette pièce audit mandrin, ledit mécanisme d'ablocage étant actionné dans le sens du serrage et du desserrage par translation du fourreau et de l'arbre porte-pièce l'un par rapport à l'autre.

Une telle disposition exonère l'utilisateur de toute intervention manuelle sur le dispositif d'ablocage pour le blocage de la pièce sur le mandrin et pour le déblocage de cette dernière, ces opérations étant effectuées de manière autonome par la machine. L'intervention de l'utilisateur se trouve ainsi limitée à la mise en place de la pièce à usiner dans le mandrin et après usinage, au retrait de cette pièce. Les risques de blessures s'en trouvent donc fortement diminués. De plus le mécanisme d'ablocage est actionné non pas par des moyens spécifiques, mais à partir du mouvement de translation du chariot portant le mandrin, uniquement par des moyens que comporte d'origine la machine. Plus précisément, la course de ce chariot et donc celle du mandrin est prolongée vers l'avant, au-delà de la course dévolue à l'usinage et cette prolongation de course est utilisée pour l'actionnement du mécanisme d'ablocage.

De telles dispositions conduisent ainsi à une simplification significative de la réalisation de la machine et à un abaissement du coût de cette dernière.

Un autre avantage de ces dispositions réside dans le fait que le mécanisme d'ablocage est interne au mandrin et se trouve protégé par ce dernier.

Un autre intérêt de ces dispositions réside dans le fait que la chambre d'usinage se trouve maintenant dépouillée de tout élément accessoire, utilisé antérieurement pour la fixation de la pièce dans le mandrin.

Selon une caractéristique de l'invention, le fourreau comporte une surface de butée arrière externe, laquelle, lors de la course vers l'avant du mandrin porte-pièce, est prévue pour venir en appui contre une surface de butée, fixe par rapport au bâti de la machine. L'appui entre la surface de butée arrière externe du fourreau et la surface de butée fixe est réalisé lorsque la course du mandrin, dévolue à l'usinage, à atteint sa limite avant. En fait, la surface de butée arrière externe du fourreau et la surface de butée fixe matérialisent en combinaison d'appui l'une contre l'autre, une fin de course avant qui ne s'oppose qu'au mouvement vers l'avant du fourreau. Ainsi par entraînement vers l'avant du chariot porteur du mandrin, l'arbre porte-pièce est entraîné vers l'avant au-delà de la course dévolue à l'usinage et le mécanisme d'ablocage est amené ainsi en position de desserrage.

De telles dispositions permettent par conséquent de faciliter davantage la mise en place et la fixation de la pièce à usiner, ainsi que son retrait du mandrin, puisque les surfaces de butée permettent d'utiliser le mouvement de translation du mandrin pour effectuer les opérations de blocage et de déblocage de ladite pièce. En outre, en position de desserrage du mécanisme d'ablocage, la pièce usinée si elle est présente dans le mandrin se trouve en position avant dans la chambre d'usinage de la machine et peut facilement être saisie par l'utilisateur et s'agissant d'une pièce à usiner, peut facilement être mise en place dans le mandrin porte-pièce et ce sans aucun effort.

Un autre avantage de ces dispositions réside dans l'obtention d'un effort de serrage calibré de la queue de préhension dans le mandrin et la reproductibilité de la valeur de cet effort de serrage d'une pièce à l'autre. L'utilisateur se trouve ainsi affranchi non seulement des opérations de serrage et desserrage de la pièce mais aussi des opérations visant à ajuster les valeurs des efforts de serrage.

Dans des modes particuliers de réalisation, la machine peut comporter en outre l'une ou plusieurs des caractéristiques suivantes, prises isolément ou selon toutes les combinaisons techniquement possibles.

Selon un mode de réalisation, le mécanisme d'ablocage est constitué par :
- au moins une bille engagée dans un logement formé par un perçage radial formé dans la partie avant de l'arbre porte-pièce et débouchant dans l'alésage borgne de ce dernier, ladite bille, en situation de blocage étant prévue pour être engagée en partie dans l'alésage borgne de l'arbre porte-pièce pour venir en appui dans une gorge continue, formée dans la queue de préhension de la pièce à usiner,
- un embout d'actionnement porté par la partie avant du fourreau et engagé autour de l'arbre porte-pièce, ledit embout comportant en regard de l'arbre porte-pièce une surface tronconique interne, laquelle, par sollicitation du fourreau vers l'avant de l'arbre porte-pièce, vient venir agir en poussée sur la bille pour repousser cette bille dans l'alésage borgne de l'arbre porte-pièce vers une position de blocage.

Une telle disposition présente le mérite de la simplicité. En outre, selon un autre mode de réalisation, la bille agit en poussée sur le flanc arrière de la gorge de la queue de préhension pour générer une sollicitation d'enfoncement de la queue de préhension dans l'alésage borgne de l'arbre porte-pièce, sous l'effet de laquelle une surface épaulée que présente un collet de la queue de préhension vient en pression contre l'extrémité avant de l'arbre porte-pièce. Cette disposition, combinée au montage ajusté de la queue de préhension dans l'alésage borgne de l'arbre porte-pièce et à l'action de la ou de chaque bille sur la queue de préhension assure une fixation sans jeu tant en rotation que translation de la pièce dans le mandrin, et réalise donc un encastrement.

Ainsi, les vibrations de la pièce lors de l'usinage, sont particulièrement réduites et la précision de l'usinage grandement améliorée.

Selon un autre mode de réalisation, le mandrin est équipé d'un organe élastique agissant sur l'arbre porte-pièce et sur le fourreau pour solliciter ce dernier et l'embout d'actionnement vers l'avant de l'arbre porte-pièce et par voie de conséquence, pour solliciter la ou chaque bille vers sa position de serrage.

Selon un autre mode de réalisation, l'organe élastique est un ressort à spires monté dans le fourreau et engagé autour de l'arbre porte-pièce, ledit ressort étant monté en compression entre une surface de butée interne du fourreau une surface de butée externe de l'arbre porte-pièce.

Selon un autre mode de réalisation, le fourreau comporte une surface de butée arrière, interne, et l'arbre porte-pièce en avant de la surface de butée interne du fourreau, comporte une surface de butée externe, prévue pour recevoir en appui la surface de butée interne du fourreau. Cette disposition constitue un système de butée qui limite la course du fourreau vers l'avant le long de l'arbre porte-pièce, la course vers l'arrière du fourreau le long de l'arbre porte-pièce étant limitée par le ressort de compression. La limitation de course vers l'avant a essentiellement pour but d'éviter que la ou chaque bille du mécanisme d'ablocage ne se coince dans le fond de son logement en l'absence de toute pièce usinée ou à usiner dans l'arbre porte-pièce.

Selon un autre mode de réalisation, le mécanisme d'ablocage présente plusieurs billes et l'arbre porte-pièce comporte plusieurs logements, chaque logement recevant une bille et une seule.

Selon un autre mode de réalisation, chaque logement prévu pour recevoir une bille, est agencé en lamage. Cette disposition a pour effet de limiter le degré d'enfoncement de la bille dans l'alésage borgne de l'arbre porte-pièce et, par voie de conséquence, d'éviter la chute des billes dans l'alésage borgne de l'arbre, en l'absence de toute pièce à usiner ou usinée.

Selon un autre mode de réalisation, la pièce à usiner étant pourvue d'une queue de préhension comportant à distance de son extrémité libre, une gorge continue de positionnement et de blocage et un collet annulaire définissant en combinaison avec la queue un épaulement d'appui tourné vers l'extrémité libre de ladite queue, la ou chaque bille du mécanisme d'ablocage, en position de serrage prend appui contre le flanc arrière de la gorge de la queue de préhension afin que ladite queue soit sollicitée en enfoncement dans l'alésage borgne et que l'épaulement que présente le collet soit amené en pression contre la face avant, le diamètre de l'alésage borgne est tel qu'il réalise avec la queue un ajustement glissant.

Selon un autre mode de réalisation, le mouvement vers l'avant de l'arbre porte-pièce par rapport au fourreau est limité par un système de butée logicielle apte à détecter la position de desserrage du mécanisme d'ablocage et apte à produire un signal d'arrêt de l'ensemble moteur d'entraînement du chariot porteur du mandrin, lorsque ladite position est atteinte, afin de stopper la progression vers l'avant de l'arbre porte-pièce.

De telles dispositions permettent par conséquent de limiter la progression vers l'avant de l'arbre porte-pièce. Dans le cas où le mécanisme d'ablocage comporte des billes, on évite en outre que celles-ci ne soient séparées involontairement de l'embout de blocage lorsque l'arbre porte-pièce est entraîné vers l'avant alors que le fourreau est immobilisé en translation par la surface de butée fixe du bâti. Cependant, en vue de travaux de maintenance visant par exemple au remplacement de la ou de chaque bille, la butée logicielle sera franchie.

Avantageusement, selon un autre mode de réalisation, le système de butée logicielle détecte la position de desserrage du mécanisme d'ablocage par mesure de l'écart entre le chariot porteur du mandrin et une référence fixe de la machine.

Selon un autre mode de réalisation, le mandrin porte-pièce est angulairement orientable par pivotement autour de son axe géométrique longitudinal, ledit mandrin étant accouplé à un moyen de positionnement angulaire et d'entraînement en rotation, porté par le chariot.

Selon un autre mode de réalisation, l'arbre porte-pièce par sa partie arrière est engagé de manière libre en rotation et fixe en translation dans des paliers disposés dans un alésage traversant pratiqué dans le chariot.

Selon un autre mode de réalisation, la machine est dotée d'une unité de contrôle et de commande apte à piloter les différents ensembles moteurs.

### Bref exposé des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :

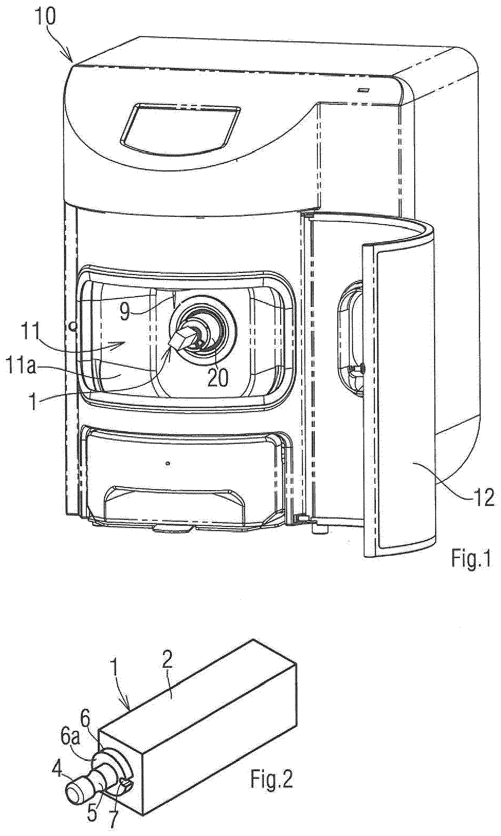

- la figure 1 est une vue en perspective d'une machine conforme à l'invention, dotée de ses capots de protection,
- la figure 2 est une vue en perspective d'une pièce à usiner,

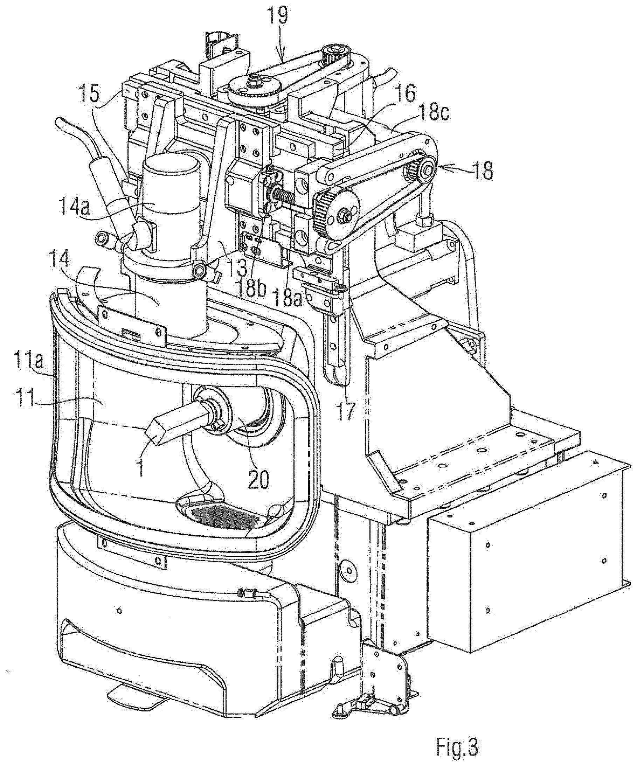

- la figure 3 est une vue avant en perspective d'une machine conforme à l'invention, sans ses capots de protection,

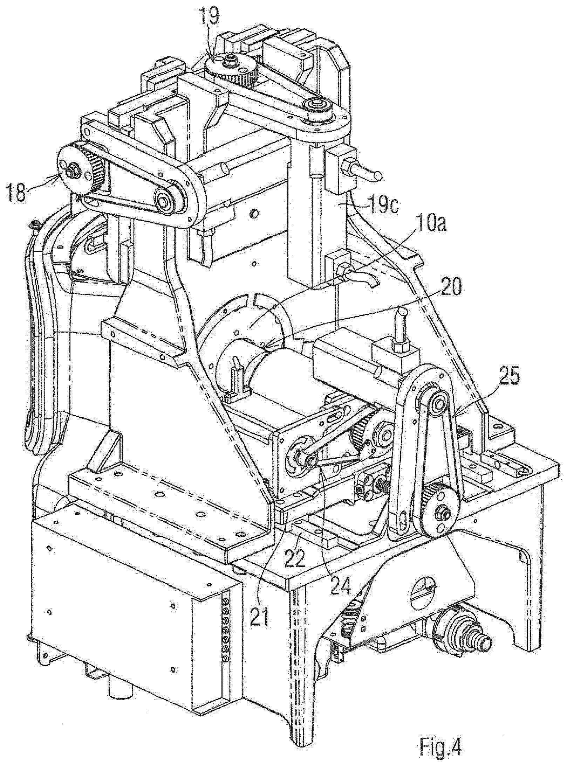

- la figure 4 est une vue arrière en perspective d'une machine conforme à l'invention, sans ses capots de protection,

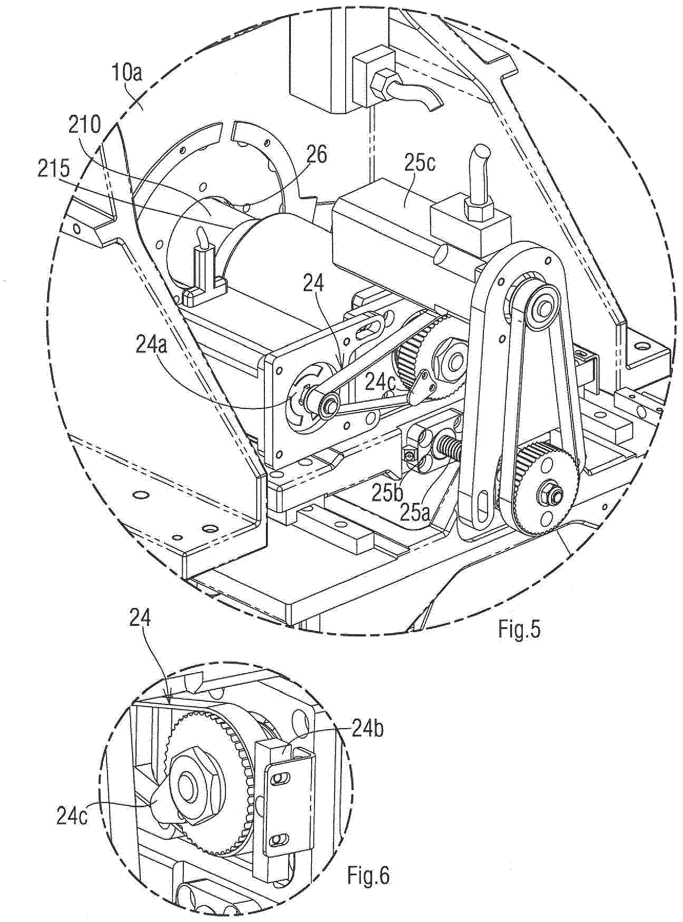

- les figures 5 et 6 sont des vues de détail de la machine selon l'invention,

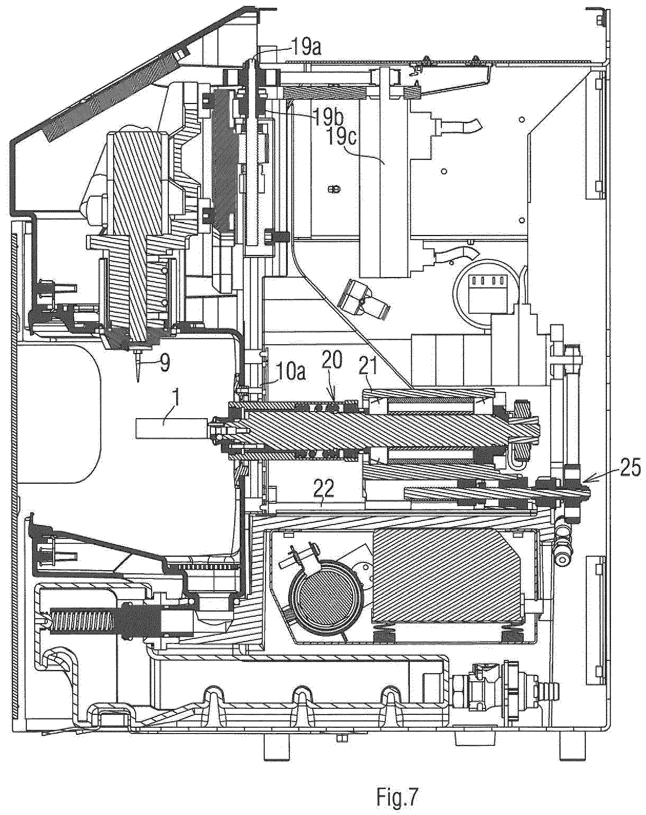

- la figure 7 est une vue en coupe de la machine, le mandrin porte pièce étant en situation de serrage de la pièce,

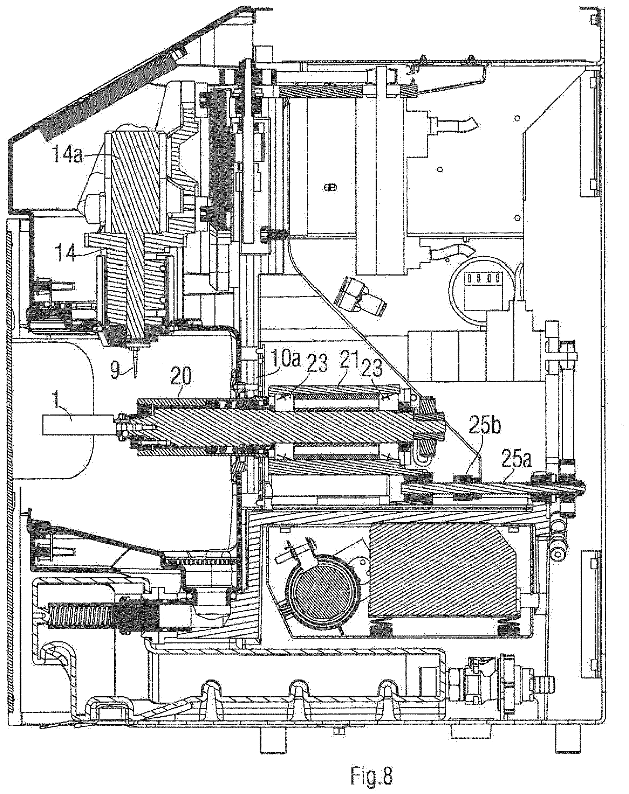

- la figure 8 est une vue en coupe de la machine, le mandrin porte-pièce étant en situation de desserrage de la pièce,

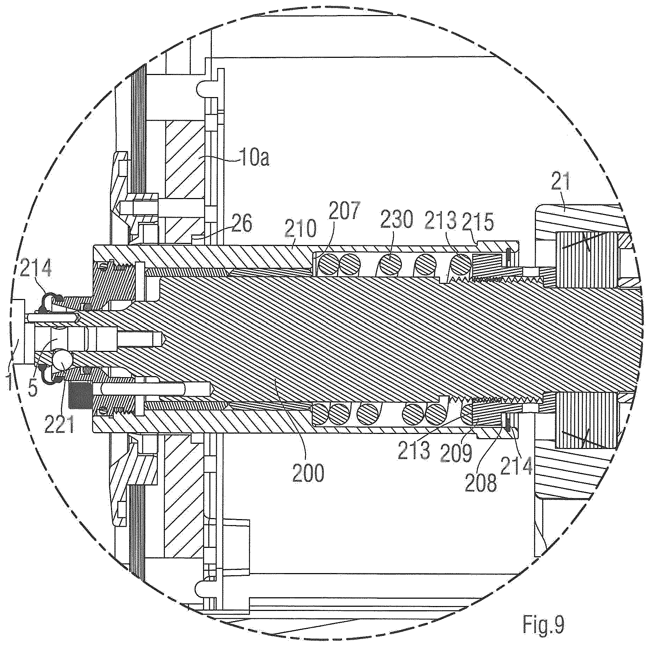

- la figure 9 est une vue de détail selon une échelle agrandie montrant notamment le mandrin, ce dernier étant en situation de serrage de la pièce,

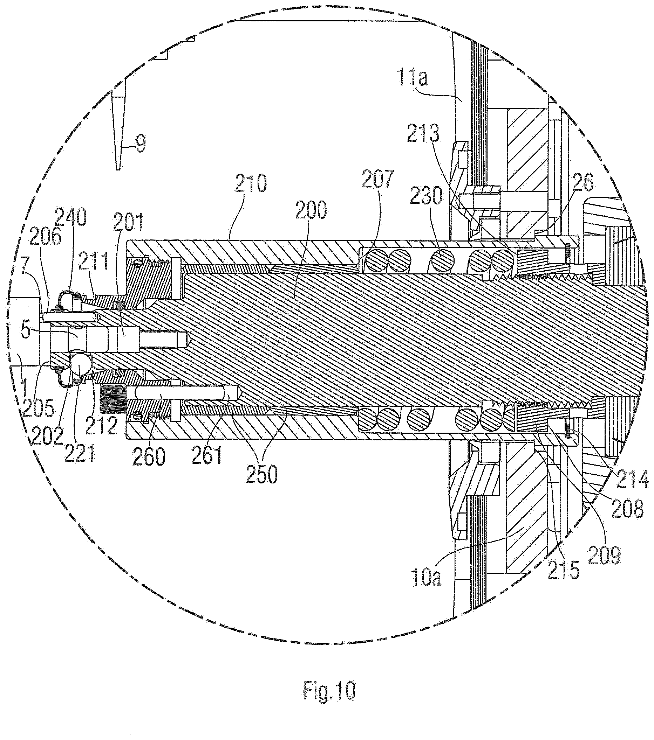

- la figure 10 est une vue de détail selon une échelle agrandie montrant notamment le mandrin, ce dernier étant en situation de desserrage de la pièce.

### Meilleure manière de réaliser l'invention.

Telle que représentée, la machine à commande numérique selon l'invention est par exemple prévue pour l'usinage par enlèvement de matière, de pièces 1 ou ébauches en vue de la réalisation de prothèses dentaires, telles que couronnes dentaires, de pièces d'horlogerie et autres pièces. S'agissant de la réalisation de couronnes dentaires, la pièce à usiner 1 est constituée essentiellement d'un bloc de céramique 2 de forme parallélépipédique, prolongé par une queue 4 de préhension, métallique, de forme cylindrique, comportant à distance de son extrémité libre, une gorge continue 5 de positionnement et de blocage. La queue de préhension 4 à son autre extrémité comporte un collet annulaire 6 par lequel elle est fixée par exemple par collage au bloc 2 de céramique. Le diamètre du collet 6 est supérieur au diamètre de la queue de préhension. Ce collet 6 définit combinaison avec la queue 4, un épaulement d'appui 6a tourné vers l'extrémité libre de ladite queue 4. Comme on peut le voir, cet épaulement d'appui 6a est contenu dans un plan géométrique perpendiculaire à l'axe géométrique longitudinal de la queue 4. Dans ce collet annulaire 6 est pratiquée une encoche 7 de positionnement angulaire.

La machine 10 selon l'invention, comprend un bâti rigide et un capotage approprié, fixé à ce bâti rigide. Cette machine 10, à l'avant, est dotée d'une chambre d'usinage 11 dans laquelle est usinée la pièce 1 et dans laquelle pénètre d'une part une broche porte-outil 14 portant un outil d'usinage 9 et d'autre part, un mandrin porte-pièce 20 portant une pièce 1 à usiner. L'usinage de la pièce 1 est opéré par enlèvement de matière à l'aide d'un outil coupant ou d'un outil abrasif. S'agissant de la fabrication d'une couronne dentaire, l'usinage n'affectera que le bloc céramique 2 de la pièce 1.

La chambre d'usinage 11 est obturable de manière étanche par un volet articulé 12, en matière transparente. Cette chambre d'usinage 11 est formée par exemple dans une coque de confinement 11a fixée à une paroi verticale 10a fixée au châssis de la machine.

Cette machine 10 comprend de plus une unité de commande et de contrôle, par exemple architecturée autour d'un microprocesseur. La machine comprend en outre un premier chariot 13 portant une broche verticale 14 porte-outil, ce premier chariot 13 étant monté de manière mobile en translation selon un axe géométrique horizontal sur des glissières rectilignes 15 horizontales, parallèles supérieure et inférieure, portées par un deuxième chariot 16 lequel est monté de manière mobile en translation selon un axe géométrique vertical sur des glissières rectilignes 17 verticales portées par le bâti de la machine.

La broche 14 en partie inférieure reçoit l'outil d'usinage 9 cet outil étant constitué par exemple par un outil fraise ou un outil meule. Cette broche 14 pénètre par sa partie inférieure dans la chambre d'usinage 11 afin d'amener l'outil d'usinage au contact de la pièce à usiner 1. La broche 14 pénètre dans la chambre d'usinage par passage au travers d'un perçage traversant formé dans la coque 11a. En partie supérieure, au-dessus de la coque 11a, la broche 14 est accouplée à l'arbre de sortie rotatif d'un organe moteur 14a piloté par l'unité de contrôle et de commande. Cet organe moteur 14a est fixé par sa carcasse, au premier chariot 13.

En vue de l'usinage, le moteur 14a imprime à la broche 14 et donc à l'outil fraise ou à l'outil meule 9 un mouvement de rotation selon une vitesse angulaire élevée. Typiquement, la vitesse angulaire de l'outil d'usinage est égale à 60 000 tours par minutes.

Le premier chariot 13 est déplaçable en translation le long des glissières 15 par un premier ensemble moteur 18 piloté par l'unité de contrôle et de commande. Cet ensemble moteur comporte un mécanisme du type vis 18a et écrou 18b et un organe moteur 18c d'entraînement de la vis en rotation. L'écrou 18b de ce mécanisme est fixé au premier chariot 13 tandis que la vis 18a, qui s'étend horizontalement, est engagée dans l'écrou 18b et est accouplée par l'intermédiaire d'une transmission de mouvement à pignons et courroies crantées avec un organe moteur 18c. Cet organe moteur 18c est porté par le deuxième chariot 16.

Le deuxième chariot 16 est déplaçable en translation le long des glissières 17 par un deuxième ensemble moteur 19 piloté par l'unité de contrôle et de commande. Cet ensemble moteur comporte un système du type vis 19a et écrou 19b et un organe moteur 19c d'entraînement de la vis en rotation. L'écrou 19b de ce mécanisme est fixé au second chariot et la vis 19a de ce mécanisme est accouplée par l'intermédiaire d'une transmission de mouvement à pignons crantés et courroies crantées avec l'arbre de sortie rotatif de l'organe moteur 19c. Cet organe moteur est fixé par sa carcasse à l'un des éléments du bâti de la machine.

La machine est également dotée d'un troisième chariot 21 monté de manière mobile en translation sur des glissières horizontales rectilignes 22 et d'un mandrin porte-pièce 20, horizontal, porté par le chariot 22. Les glissières 22 sont portées par le bâti de la machine.

Le mandrin porte-pièce 200 est angulairement orientable par pivotement autour de son axe géométrique longitudinal, lequel est horizontal et perpendiculaire aux directions de déplacement des premier 13 et deuxième 16 chariot et parallèle à direction de déplacement du chariot 21 définie par les glissières 22.

Le mandrin porte-pièce 20 est engagé dans des paliers de guidage en rotation 23 portés par le troisième chariot 21, et en vue de son orientation angulaire et de son entraînement en rotation, est accouplé à un moyen moteur de positionnement angulaire 24 et d'entraînement en rotation, solidaire du troisième chariot 21, ce moyen moteur de positionnement angulaire et d'entraînement en rotation étant piloté par l'unité de contrôle et de commande.

Le troisième chariot 21 est déplaçable en translation le long des glissières 22 par un ensemble moteur 25 solidaire du bâti de la machine, cet ensemble moteur 25 étant piloté par l'unité de contrôle et de commande.

Le moyen de positionnement angulaire 24 et d'entraînement en rotation est formé par exemple d'un moteur 24a du type pas à pas par exemple accouplé par l'intermédiaire d'une transmission de mouvement à pignons et courroies crantés à l'arbre porte-pièce 200. À ce moyen de positionnement angulaire est associé un codeur apte à délivrer à l'unité de contrôle et de commande, une information représentative de la position angulaire de l'arbre porte-pièce 200 par rapport à une origine qui peut être matérialisée par le positionnement face à un détecteur 24b, d'un doigt 24c fixé au pignon cranté d'entraînement de l'arbre porte-pièce 200.

L'ensemble moteur 25 est constitué par un mécanisme du type vis 25a et écrou 25b et par un organe moteur 25c d'entraînement de la vis en rotation, cet organe moteur étant par exemple du type pas à pas. L'écrou 25b de ce mécanisme est fixé au troisième chariot 21 et prend la forme d'un taraudage pratiqué dans ce chariot. La vis 25a, qui s'étend horizontalement, est engagée dans l'écrou 25b et est accouplée par l'intermédiaire d'une transmission de mouvement à pignons et courroies crantés à l'organe moteur 25a. Cet organe moteur 25c est porté par le bâti de la machine.

À cet ensemble moteur 25 est associé un codeur apte à délivrer à l'unité de contrôle et de commande une information relative à la position du chariot 21 ou troisième chariot, le long de ses glissières 22, par rapport à une référence fixe de la machine. Plus précisément, l'information délivrée par le capteur est relative à la valeur de l'écart séparant le chariot 21 de la référence fixe. Cette référence est matérialisée par un capteur inductif fixé au bâti de la machine et par un doigt, fixé au chariot 21, ce doigt étant apte à être détecté par le capteur inductif. Ce capteur inductif est connecté électriquement à l'unité de contrôle et de commande.

Le mandrin 20, par sa partie avant, reçoit la queue de préhension 4 de la pièce à usiner et est situé dans la chambre d'usinage 11 afin que la pièce 1 à usiner puisse être présentée à l'action d'usinage de l'outil d'usinage 9. Par sa partie arrière, le mandrin est accouplé au moyen de positionnement angulaire 24 et d'entraînement en rotation. Ce mandrin 20 est engagé dans un perçage traversant pratiqué dans la coque 11a et dans un perçage traversant pratiqué dans la paroi 10a.

Selon une forme préférée de réalisation, le mandrin 20 est formé d'un arbre porte-pièce 200, d'un fourreau 210 substantiellement cylindrique, engagé de manière mobile en translation sur l'arbre porte-pièce 200 et d'un mécanisme d'ablocage logé dans la partie avant de l'arbre porte-pièce 200 et dans la partie avant du fourreau 210, ce mécanisme d'ablocage étant prévu pour la fixation de la pièce à usiner au mandrin 20 étant actionné dans le sens du serrage ou desserrage de la pièce à partir du mouvement relatif de translation du fourreau 210 et de l'arbre 200 l'un par rapport à l'autre.

L'arbre porte-pièce 200 est engagé de manière libre en rotation et fixe en translation dans les paliers 23. Ces derniers sont disposés dans un alésage traversant pratiqué dans le troisième chariot 21 et sont constitués par exemple par des roulements à contact obliques. De manière connue en soi, des entretoises sont disposées entre les bagues internes et externes de ces roulements.

La partie arrière de l'arbre porte-pièce 200 est accouplée au moyen de positionnement angulaire 24 et d'entraînement en rotation et la partie avant de cet arbre 200, forme porte à faux par rapport au chariot 21, et est équipée d'un alésage borgne axial 201 prévu pour recevoir la queue de préhension 4 que comporte la pièce 1 à usiner. L'alésage borgne 201 débouche dans la face avant 205, plane de l'arbre 200, cette face avant étant perpendiculaire à l'axe géométrique longitudinal dudit arbre.

Le fourreau 210 est engagé de manière mobile en translation sur l'arbre porte-pièce 200 et s'étend sur ledit arbre entre la partie avant de ce dernier et le troisième chariot 21. Pour assurer le guidage en translation du fourreau 210 par rapport à l'arbre sont prévues des bagues de guidage 250 enfilées sur l'arbre 200 et fixées au fourreau dans un alésage dédié formé dans la partie avant dudit fourreau. Ces bagues de guidage 250 présentent donc un alésage traversant en relation d'ajustement glissant avec une portée cylindrique formée sur l'arbre 200.

De préférence, ce fourreau 210 et l'arbre porte-pièce 200 sont immobilisés en rotation l'un par rapport à l'autre. À cet effet l'embout d'actionnement 211, dans le fourreau 210, de manière décalée par rapport à l'axe géométrique longitudinal du mandrin porte pièce, porte un pion 260 d'immobilisation en rotation, interne, parallèle à l'axe géométrique longitudinal du mandrin et l'arbre cylindrique 200 est doté d'un alésage borgne 261 dans lequel est engagé en coulissement ledit pion.

Le mécanisme d'ablocage est apte à agir dans l'alésage borgne 201 de l'arbre porte-pièce 200, sur la queue de préhension 4 de la pièce 1 pour assurer la fixation de cette pièce audit mandrin et plus particulièrement agit dans la gorge 5 de la queue de préhension.

Le mécanisme d'ablocage est par exemple constitué par au moins une bille 221 engagée dans un logement 202 constitué par un perçage radial agencé en lamage formé dans la partie avant de l'arbre porte-pièce 200 et débouchant dans l'alésage borgne 201 de ce dernier, et par un embout d'actionnement 211, porté par la partie avant du fourreau 210 et engagé autour de l'arbre porte-pièce 200, ledit embout 211 comportant en regard de l'arbre porte-pièce 200, une surface tronconique interne 212 prévue, par sollicitation du fourreau 210 vers l'avant de l'arbre porte-pièce 200, pour venir agir sur la bille 221 et repousser cette dernière dans l'alésage borgne 201 de l'arbre porte-pièce vers une position de serrage de la queue de préhension 4. En situation de serrage, la bille 221 est engagée en partie dans l'alésage borgne 201 de l'arbre porte-pièce 200 pour venir en appui contre la queue de préhension 4 dans la gorge 5, par exemple de section droite semi circulaire, que présente cette dernière.

Avantageusement la bille 221 en position de serrage prend appui contre le flanc arrière de la gorge 5 de la queue de préhension 4 afin que ladite queue soit sollicitée en enfoncement dans l'alésage borgne 201 et que l'épaulement 6a que présente le collet 6 de la queue de préhension 4 de la pièce à usiner, soit amené en pression contre la face avant 205 que présente l'arbre porte-pièce 200, l'alésage borgne 201 étant pratiqué dans ledit arbre depuis cette face avant 205. Par ailleurs, le diamètre de l'alésage borgne 201 est tel qu'il réalise avec la queue 4 un ajustement glissant, précis, à jeu fonctionnel minimal, du type par exemple H7 g6. De cette manière est réalisée une liaison du type encastrement s'opposant tant à la translation de la pièce par rapport à l'arbre 200 qu'à sa rotation par rapport à cet arbre.

Le positionnement angulaire de la pièce à usiner 1 par rapport à l'arbre 200 est réalisé par la présence d'un pion de positionnement 206 formant saillie sur la face avant 205 afin de coopérer en emboîtement de forme avec l'encoche de positionnement 7 que présente le collet 6 de la pièce 1.

Selon une forme pratique de réalisation, l'embout d'actionnement 211 est doté d'une partie cylindrique filetée par laquelle il se fixe par vissage dans un taraudage formé dans la partie avant du fourreau 210.

Selon une forme pratique de réalisation, le mécanisme d'ablocage présente plusieurs billes 221 et l'arbre porte-pièce 200 comporte plusieurs logements 202 régulièrement répartis. Comme on le comprend chaque logement 202 est prévu pour ne recevoir qu'une seule bille 221 et une seule. Avantageusement chaque logement est agencé en lamage de façon que la bille 221 correspondante ne puisse pénétrer qu'en partie seulement dans l'alésage borgne 201.

Afin de renforcer la protection du mécanisme d'ablocage et notamment des billes, un soufflet d'étanchéité 240 est engagé sur l'arbre 200 et est fixé de manière étanche à la partie avant de cet arbre et à la partie avant de l'embout d'actionnement 211.

De préférence le fourreau 210 et l'embout d'actionnement 211 sont sollicités vers l'avant de l'arbre 200 par un organe élastique 230. Une telle disposition a pour effet de solliciter les billes 221 du mécanisme d'ablocage vers leur position de serrage. Cet organe élastique 230 agit simultanément sur l'arbre porte-pièce 200 et sur le fourreau 210 et est constitué par un ressort à spires. Ce ressort à spires 230 est disposé dans le fourreau 210 et est engagé autour de l'arbre porte-pièce 200. Ce ressort 230 est monté en compression entre une surface de butée interne 213 du fourreau, formant épaulement dans le fourreau 210, et une surface de butée externe 207 de l'arbre porte-pièce 200 et formant épaulement. Comme on le comprend, cet organe élastique prend appui contre les deux surfaces de butée 207 et 213.

Le fourreau 210, sous l'effet de l'action de l'organe élastique 230, est sollicité vers l'avant de l'arbre 200. Pour limiter cette course, le fourreau 210 comporte une butée arrière interne 214 et l'arbre porte-pièce 200, en avant de la butée interne 214 du fourreau, comporte une surface de butée externe 208, laquelle en l'absence de pièce dans l'arbre porte-pièce 200 est prévue pour recevoir en appui la butée interne 214 du fourreau 210. On évite ainsi tout coincement des billes 221 dans le fond de leur logement en l'absence de pièce 1 dans l'alésage borgne 201.

Selon une forme pratique de réalisation, la butée arrière 214 est formée par un anneau élastique plat, connu en soi, engagé dans une gorge interne pratiquée dans le fourreau 210 en extrémité arrière.

La surface de butée externe 208 est, selon la forme préférée de réalisation, pratiquée dans une douille de serrage 209 prévue pour exercer un effort axial calibré sur la bague intérieure du roulement adjacent. Cette bague 209 est enfilée sur l'arbre porte-pièce 200 et est fixée par vissage à cet arbre 200. À cet effet l'arbre 200 comporte une portée filetée et la douille comporte une portée taraudée pour coopérer en vissage avec la portée filetée de l'arbre porte-pièce 200. La surface de butée 213 est également ménagée sur cette bague 209.

Le fourreau 210 comporte de plus une surface de butée arrière externe 215, laquelle, lors de la course vers l'avant du mandrin 20, est prévue pour venir en appui contre une surface de butée 26 fixe par rapport au bâti de la machine. Cette surface de butée 26 est formée par exemple par la périphérie du perçage de passage du mandrin 20 que comporte la paroi verticale 10a de la machine. Lorsque la course du troisième chariot 21 et donc du mandrin 20 est prolongée au-delà de la course dévolue à l'usinage, la surface de butée 215 vient en appui contre la surface de butée fixe 26 ce qui stoppe la progression du fourreau 210 vers l'avant. Le mouvement d'avance du chariot 21 se poursuivant, l'arbre porte-pièce 200 est entraîné en translation vers l'avant et les billes 221 du mécanisme d'ablocage se dégagent de l'emprise de la surface tronconique 212 de l'embout d'actionnement 211. Le mécanisme d'ablocage est actionné ainsi vers sa position de desserrage et la queue de préhension de la pièce 1 se trouve desserrée. La pièce peut alors être retirée du mandrin 20.

De préférence, le mouvement vers l'avant de l'arbre porte-pièce 200 par rapport au fourreau est limité par un système de butée logicielle apte à détecter la position de desserrage du mécanisme d'ablocage et apte à produire un signal d'arrêt de l'ensemble moteur 25 lorsque ladite position est atteinte. De cette manière, la poursuite du mouvement vers l'avant de l'arbre porte-pièce est stoppée. Cependant, le mouvement vers l'arrière dudit arbre, pour amener le mécanisme d'ablocage en position de serrage, peut s'effectuer.

De préférence, le système de butée logicielle détecte la position de desserrage du mécanisme d'ablocage par mesure de l'écart entre le chariot 21 et une référence fixe de la machine.

En vue de la maintenance et du remplacement des billes, cette butée logicielle peut être franchie à l'aide d'une commande spécifique.

Enfin, la machine est dotée d'une interface par laquelle il est possible notamment de déclencher un cycle de fabrication, d'introduire des données dans l'unité de contrôle et de commande, de lire des données et de mener des opérations de maintenance.

Selon une forme de réalisation, l'interface comporte un clavier et un écran. En variante, l'interface est constituée par un écran du type tactile.

La machine, telle que décrite, permet de réaliser l'usinage de formes relativement complexes comme celles d'une couronne dentaire.

Comme on le conçoit, le déplacement en translation des premier, deuxième et troisième chariots et le déplacement en rotation du mandrin 20 permettent la réalisation d'usinages par interpolation. Ainsi, la machine telle que décrite est du type à commande numérique à quatre axes interpolés.

Bien que décrite pour la réalisation de couronnes dentaires, la machine selon l'invention, est utilisable pour la fabrication de prothèses dentaires autres que les couronnes dentaires.

De plus, la machine, selon l'invention, n'est pas limitée à l'art dentaire, au contraire, elle est utilisable dans le domaine de la mécanique de précision par exemple dans le domaine de l'horlogerie.

En outre, la machine selon l'invention présente des dimensions relativement réduites pour une utilisation sur le plan de travail d'un dentiste ou d'un prothésiste.

De même, il va de soi que la présente invention peut recevoir tous aménagements et variantes du domaine des équivalents techniques sans pour autant sortir du cadre du présent brevet tel que défini par les revendications ci-après.

## Revendications

1. Machine à commande numérique pour l'usinage d'une pièce (1) pourvue d'une queue (4) de préhension, ladite machine comprenant, un bâti, au moins une broche porte-outil (14) prévue pour recevoir un outil et au moins un mandrin porte-pièce (20) porté par un chariot (21) de la machine monté sur des glissières (22) de guidage de la machine, fixées au bâti, ledit chariot (21) étant déplaçable en translation le long des glissières (22) par un ensemble moteur (25) solidaire du bâti, ladite machine comportant une chambre d'usinage (11) dans laquelle pénètre la broche porte outil (14) et le mandrin porte pièce (20), **caractérisée en ce que** le mandrin porte-pièce comprend :
- un arbre porte-pièce (200) dont la partie avant, est dotée d'un alésage borgne axial (201) prévu pour recevoir la queue de préhension (4) que comporte la pièce à usiner, ledit alésage borgne s'étendant dans l'arbre porte pièce (200) depuis l'extrémité avant dudit arbre (200),
- un fourreau (210) engagé de manière mobile en translation sur ledit arbre porte-pièce (200) et s'étendant sur la partie avant dudit arbre (200),
- un mécanisme d'ablocage disposé dans la partie avant du fourreau (210) et dans la partie avant de l'arbre porte-pièce (200), lequel mécanisme d'ablocage est prévu pour agir en serrage dans l'alésage borgne (201) de l'arbre porte-pièce (200), sur la queue de préhension (4) de la pièce (1) pour assurer la fixation de cette pièce (1) audit mandrin (20), ledit mécanisme d'ablocage étant actionné dans le sens du serrage et du desserrage par translation du fourreau (210) et de l'arbre porte-pièce (200) l'un par rapport à l'autre,
et **en ce que** le fourreau (210) comporte une surface de butée arrière, externe (215), laquelle, lors de la course vers l'avant du mandrin (20), est prévue pour venir en appui contre une surface de butée (26), fixe par rapport au bâti, afin de s'opposer, lorsque le mandrin est entraîné vers l'avant au-delà de sa course dévolue à l'usinage, au mouvement du fourreau (210) vers l'avant tout en permettant le mouvement vers l'avant de l'arbre porte-pièce (200) de manière à actionner le mécanisme d'ablocage dans le sens du desserrage.

2. Machine selon la revendication 1, **caractérisée en ce que** le mécanisme d'ablocage est constitué par :
- au moins une bille (221) engagée dans un logement (202) formé par un perçage radial formé dans la partie avant de l'arbre porte-pièce (200) et débouchant dans l'alésage borgne (201) de ce dernier, la ou chaque bille (221), en situation de blocage étant prévue pour être engagée en partie dans l'alésage borgne (201) de l'arbre porte-pièce pour venir en appui dans une gorge continue (5), formée dans la queue de préhension (4) de la pièce à usiner,
- un embout d'actionnement (211) porté par la partie avant du fourreau et engagé autour de l'arbre porte-pièce (200), ledit embout comportant en regard de l'arbre porte-pièce (200), une surface tronconique interne (212) laquelle, par sollicitation du fourreau (210) vers l'avant de l'arbre porte-pièce (200), vient agir en poussée sur la bille (211) pour repousser cette bille dans l'alésage borgne (201) de l'arbre porte-pièce (200) vers une position de blocage.

3. Machine selon la revendication 2, **caractérisée en ce que** le mécanisme d'ablocage présente plusieurs billes (221) et l'arbre porte-pièce comporte plusieurs logements (202), chaque logement (202) recevant une bille (211) et une seule.

4. Machine selon la revendication 2 ou la revendication 3, **caractérisée en ce que** le ou chaque logement (202) est agencé en lamage.

5. Machine selon la revendication 2, **caractérisée en ce que** le mandrin (20) est équipé d'un organe élastique (230) agissant sur l'arbre porte-pièce (200) et sur le fourreau (210) pour solliciter ce dernier et l'embout d'actionnement (211) vers l'avant de l'arbre porte-pièce (200) et par voie de conséquence solliciter la ou chaque bille (221) vers sa position de blocage.

6. Machine selon la revendication précédente, **caractérisée en ce que** l'organe élastique (230) est un ressort à spires, monté dans le fourreau (210) et engagé autour de l'arbre porte-pièce (200), ledit ressort étant monté en compression entre une surface de butée interne (213) du fourreau et une surface de butée externe (207) de l'arbre porte-pièce (200).

7. Machine selon l'une quelconque des revendications 2 à 6, **caractérisée en ce que** le fourreau (210) comporte une butée arrière interne (214) et que l'arbre porte-pièce (200), en avant de la butée interne (214) du fourreau (210), comporte une surface de butée externe (208) prévue pour recevoir en appui la surface de butée interne du fourreau et limiter ainsi le mouvement du fourreau (210) vers l'avant de l'arbre (200) sous l'effet de l'action de l'organe élastique (230).

8. Machine selon l'une quelconque des revendications 2 à 7, **caractérisée par** un soufflet d'étanchéité (240) engagé sur l'arbre porte-pièce (200) et est fixé de manière étanche à la partie avant dudit arbre (200) et à la partie avant de l'embout d'actionnement (211).

9. Machine selon l'une quelconque des revendications précédentes, **caractérisée en ce que** le fourreau (210) et l'arbre porte-pièce (200) sont immobilisés en rotation l'un par rapport à l'autre.

10. Machine selon les revendications 2 et 9 prises ensemble, **caractérisée en ce que** l'embout d'actionnement (211), de manière décalée par rapport à l'axe géométrique longitudinal du mandrin porte-pièce (20), dans le fourreau (210), porte un pion (260) d'immobilisation en rotation et que l'arbre porte-pièce (20) présente un alésage borgne (261) recevant en coulissement le pion d'immobilisation.

11. Machine selon l'une quelconque des revendications précédentes, **caractérisée par** un système de butée logicielle apte à détecter la position de desserrage du mécanisme d'ablocage et apte à produire un signal d'arrêt de l'ensemble moteur (25) lorsque ladite position est atteinte, afin de stopper la progression vers l'avant de l'arbre porte-pièce (200).

12. Machine selon l'une quelconque des revendications précédentes, **caractérisée en ce que** le mandrin porte-pièce (20) est horizontal et que les glissières (22) du chariot (21) sont horizontales, l'axe géométrique longitudinal du mandrin porte-pièce (20) et les glissières (22) étant parallèles.

13. Machine selon l'une quelconque des revendications précédentes, **caractérisée en ce que** le mandrin porte-pièce est angulairement orientable par pivotement autour de son axe géométrique longitudinal, ledit mandrin (20) étant accouplé à un moyen (24) de positionnement angulaire et d'entraînement en rotation, porté par le chariot (21).

14. Machine selon l'une quelconque des revendications précédentes, **caractérisée en ce que** la broche porte-outil (14) est verticale et est mue en rotation autour de son axe géométrique longitudinal vertical par un organe moteur (14a), ladite broche étant ledit organe moteur d'entraînement étant portés par un premier chariot (13) monté de manière mobile en translation selon un axe géométrique horizontal sur des glissières horizontales (15) portées par un deuxième chariot (16) et étant déplaçable en translation selon cet axe géométrique horizontal par un premier ensemble moteur (18) solidaire du deuxième chariot (16), lequel est monté de manière mobile en translation selon un axe géométrique vertical sur des glissières verticales (17) portées par le bâti de la machine, ce deuxième chariot (16) étant déplaçable en translation le long des dites glissières (17) par un deuxième ensemble moteur (19) solidaire du bâti.

15. Machine selon l'une quelconque des revendications précédentes, **caractérisée en ce que** la partie avant du mandrin porte-pièce (20) pénètre dans la chambre d'usinage par passage au travers d'un perçage traversant pratiqué dans une paroi (10a) fixée au bâti de ladite machine, et **en ce que** la surface de butée (26) fixe est formée par la périphérie du perçage de passage du mandrin (20).

## Patentansprüche

1. Numerisch gesteuerte Maschine zum Bearbeiten eines Werkstücks (1), das mit einem Griffschaft (4) versehen ist, wobei die Maschine einen Rahmen umfasst, mindestens eine Werkzeugspindel (14), die dafür vorgesehen ist, ein Werkzeug aufzunehmen, und mindestens einen Werkstückdorn (20), der von einem Schlitten (21) der Maschine getragen wird, welcher auf Führungsschienen (22) der Maschine montiert ist, die am Rahmen befestigt sind, wobei der Schlitten (21) von einer Motorbaugruppe (25), die fest mit dem Rahmen verbunden ist, translatorisch entlang der Schienen (22) verschoben werden kann, wobei die Maschine eine Bearbeitungskammer (11) umfasst, in die die Werkzeugspindel (14) und der Werkstückdorn (20) eindringt, **dadurch gekennzeichnet, dass** der Werkstückdorn umfasst:
- eine Werkstückwelle (200), deren vorderer Teil mit einer axialen Sackbohrung (201) ausgestattet ist, die dafür vorgesehen ist, den Griffschaft (4) aufzunehmen, welchen das zu bearbeitende Werkstück umfasst, wobei sich die Sackbohrung ab dem vorderen Ende der Welle (200) in der Werkstückwelle (200) erstreckt,
- eine Buchse (210), die translationsbeweglich auf der Werkstückwelle (200) eingreift und sich auf dem vorderen Teil der Welle (200) erstreckt,
- einen Spannmechanismus, der im vorderen Teil der Buchse (210) und im vorderen Teil der Werkstückwelle (200) angeordnet ist, welcher Spannmechanismus dafür vorgesehen ist, in der Sackbohrung (201) der Werkstückwelle (200) klemmend auf den Griffschaft (4) des Werkstücks (1) zu wirken, um die Befestigung dieses Werkstücks (1) am Dorn (20) sicherzustellen, wobei der Spannmechanismus in der Klemm- und der Löserichtung durch Translation der Buchse (210) und der Werkstückwelle (200) in Bezug zueinander betätigt wird,
und dadurch, dass die Buchse (210) eine hintere äußere Anschlagfläche (215) umfasst, die dafür vorgesehen ist, beim Hub des Dorns (20) nach vorne an einer Anschlagfläche (26), die in Bezug auf den Rahmen fest ist, in Anlage zu kommen, um sich, wenn der Dorn bei der Bearbeitung über den ihm zugedachten Hub hinaus nach vorne getrieben wird, der Bewegung der Buchse (210) nach vorne zu widersetzen, während gleichzeitig die Bewegung der Werkstückwelle (200) nach vorne ermöglicht wird, um den Spannmechanismus in der Löserichtung zu betätigen.

2. Maschine nach Anspruch 1, **dadurch gekennzeichnet, dass** der Spannmechanismus besteht aus:
- mindestens einer Kugel (221), die in eine Aufnahme (202) eingreift, welche von einer radialen Bohrung gebildet wird, die im vorderen Teil der Werkstückwelle (200) gebildet ist und in die Sackbohrung (201) dieser letzteren mündet, wobei die oder jede Kugel (221) dafür vorgesehen ist, in Sperrstellung zum Teil in die Sackbohrung (201) der Werkstückwelle einzugreifen, um in einer durchgehenden Nut (5), die im Griffschaft (4) des zu bearbeitenden Werkstücks gebildet ist, in Anlage zu kommen,
- ein Betätigungs-Endstück (211), das vom vorderen Teil der Buchse getragen wird und um die Werkstückwelle (200) herum eingreift, wobei das Endstück der Werkstückwelle (200) zugewandt eine kegelstumpfförmige Innenfläche (212) umfasst, die durch Vorspannen der Buchse (210) zur Vorderseite der Werkstückwelle (200) drückend auf die Kugel (211) wirkt, um diese Kugel zu einer Sperrposition in die Sackbohrung (201) der Werkstückwelle (200) zurückzudrücken.

3. Maschine nach Anspruch 2, **dadurch gekennzeichnet, dass** der Spannmechanismus mehrere Kugeln (221) aufweist, und die Werkstückwelle mehrere Aufnahmen (202) umfasst, wobei jede Aufnahme (202) eine Kugel (211), und nur eine, aufnimmt.

4. Maschine nach Anspruch 2 oder Anspruch 3, **dadurch gekennzeichnet, dass** die oder jede Aufnahme (202) versenkt eingerichtet ist.

5. Maschine nach Anspruch 2, **dadurch gekennzeichnet, dass** der Dorn (20) mit einem elastischen Organ (230) ausgerüstet ist, das auf die Werkstückwelle (200) und auf die Buchse (210) wirkt, um diese letztere und das Betätigungs-Endstück (211) zur Vorderseite der Werkstückwelle (200) vorzuspannen, und in der Folge die oder jede Kugel (221) zu ihrer Sperrposition vorzuspannen.

6. Maschine nach dem vorstehenden Anspruch, **dadurch gekennzeichnet, dass** das elastische Organ (230) eine Schraubenfeder ist, die in der Buchse (210) montiert ist und um die Werkstückwelle (200) herum eingreift, wobei die Feder zusammengedrückt zwischen einer inneren Anschlagfläche (213) der Buchse und einer äußeren Anschlagfläche (207) der Werkstückwelle (200) montiert ist.

7. Maschine nach einem der Ansprüche 2 bis 6, **dadurch gekennzeichnet, dass** die Buchse (210) einen hinteren inneren Anschlag (214) umfasst, und dass die Werkstückwelle (200), vor dem inneren Anschlag (214) der Buchse (210), eine äußere Anschlagfläche (208) umfasst, die dafür vorgesehen ist, die innere Anschlagfläche der Buchse in Anlage aufzunehmen und so die Bewegung der Buchse (210) zur Vorderseite der Welle (200) unter der Wirkung der Tätigkeit des elastischen Organs (230) zu begrenzen.

8. Maschine nach einem der Ansprüche 2 bis 7, **gekennzeichnet durch** einen Dichtungsbalg (240), der auf der Werkstückwelle (200) eingreift und dicht am vorderen Teil der Welle (200) und am vorderen Teil des Betätigungs-Endstücks (211) befestigt ist.

9. Maschine nach einem der vorstehenden Ansprüche, **dadurch gekennzeichnet, dass** die Buchse (210) und die Werkstückwelle (200) in Bezug zueinander verdrehgesichert sind.

10. Maschine nach den Ansprüchen 2 und 9 in Kombination, **dadurch gekennzeichnet, dass** das Betätigungs-Endstück (211) in Bezug auf die geometrische Längsachse des Werkstückdorns (20) versetzt in der Buchse (210) einen Verdrehsicherungszapfen (260) trägt, und dass die Werkstückwelle (20) eine Sackbohrung (261) aufweist, die den Sicherungszapfen gleitend aufnimmt.

11. Maschine nach einem der vorstehenden Ansprüche, **gekennzeichnet durch** ein Software-Anschlagsystem, das in der Lage ist, die Löseposition des Spannmechanismus zu erkennen, und in der Lage ist, ein Signal zum Anhalten der Motorbaugruppe (25) zu erzeugen, wenn die Position erreicht ist, um den Vorschub der Werkstückwelle (200) nach vorne zu stoppen.

12. Maschine nach einem der vorstehenden Ansprüche, **dadurch gekennzeichnet, dass** der Werkstückdorn (20) horizontal ist, und dass die Schienen (22) des Schlittens (21) horizontal sind, wobei die geometrische Längsachse des Werkstückdorns (20) und die Schienen (22) parallel sind.

13. Maschine nach einem der vorstehenden Ansprüche, **dadurch gekennzeichnet, dass** der Werkstückdorn durch Schwenken um seine geometrische Längsachse herum winkelmäßig ausgerichtet werden kann, wobei der Dorn (20) mit einem Winkelpositionier- und Drehantriebsmittel (24) gekoppelt ist, das vom Schlitten (21) getragen wird.

14. Maschine nach einem der vorstehenden Ansprüche, **dadurch gekennzeichnet, dass** die Werkzeugspindel (14) vertikal ist und von einem Motororgan (14a) um ihre vertikale geometrische Längsachse herum drehend angetrieben wird, wobei die Spindel das Antriebsmotororgan ist, die von einem ersten Schlitten (13) getragen werden, der entlang einer horizontalen geometrischen Achse translationsbeweglich auf horizontalen Schienen (15) montiert ist, die von einem zweiten Schlitten (16) getragen werden, und entlang dieser horizontalen geometrischen Achse translatorisch verschoben werden kann von einer ersten Motorbaugruppe (18), die fest mit dem zweiten Schlitten (16) verbunden ist, welcher entlang einer vertikalen geometrischen Achse translationsbeweglich auf vertikalen Schienen (17) montiert ist, die vom Rahmen der Maschine getragen werden, wobei dieser zweite Schlitten (16) von einer zweiten Motorbaugruppe (19), die fest mit dem Rahmen verbunden ist, entlang dieser Schienen (17) translatorisch verschoben werden kann.

15. Maschine nach einem der vorstehenden Ansprüche, **dadurch gekennzeichnet, dass** der vordere Teil des Werkstückdorns (20) durch Durchtreten durch eine Durchgangsbohrung, die in einer am Rahmen der Maschine befestigten Wand (10a) ausgestaltet ist, in die Bearbeitungskammer eindringt, und dadurch, dass die feste Anschlagfläche (26) vom Umfang der Durchtrittsbohrung des Dorns (20) gebildet wird.

## Claims

1. Numerical control machine for machining a part (1) provided with a grasping stem (4), said machine comprising, a frame, at least one tool carrying spindle (14) provided to receive a tool and at least one part carrying mandrel (20) carried by a carriage (21) of the machine mounted on guide rails (22) of the machine, fixed to the frame, said carriage (21) able to be moved in translation along the rails (22) by a motor assembly (25) integral with the frame, said machine comprising a machining chamber (11) wherein penetrates the tool carrying spindle (14) and the part carrying mandrel (20), **characterised in that** the part carrying mandrel comprises:
- a part carrying shaft (200) of which the front portion, is provided with an axial blind bore (201) intended to receive the grasping stem (4) which comprises the part to be machined, said blind bore extending in the part carrying shaft (200) from the front end of said shaft (200),
- a sheath (210) engaged movably in translation on said part carrying shaft (200) and extending over the front portion of said shaft (200),
- a clamping mechanism arranged in the front portion of the sheath (210) and in the front portion of the part carrying shaft (200), said clamping mechanism is intended to act in clamping in the blind bore (201) of the part carrying shaft (200), on the grasping stem (4) of the part (1) in order to ensure the fastening of this part (1) to said mandrel (20), said clamping mechanism being actuated in the direction of the clamping and unclamping by translation of the sheath (210) and of the part carrying shaft (200) with respect to one another,
and **in that** the sheath (210) comprises a rear, external abutment surface (215), which, during the travel towards the front of the mandrel (20), is intended to bear against an abutment surface (26), fixed with respect to the frame, in order to oppose, when the mandrel is driven towards the front beyond its travel devoted for machining, the movement of the sheath (210) towards the front while still allowing movement towards the front of the part carrying shaft (200) in such a way as to actuate the clamping mechanism in the direction of unclamping.

2. Machine according to claim 1, **characterised in that** the clamping mechanism is formed by:
- at least one ball (221) engaged in a housing (202) formed by a radial hole formed in the front portion of the part carrying shaft (200) and opening into the blind bore (201) of the latter, the or each ball (221), in the locked situation being intended to be partially engaged in the blind bore (201) of the part carrying shaft to bear in a continuous groove (5), formed in the grasping stem (4) of the part to be machined,
- an actuating endpiece (211) carried by the front portion of the sheath and engaged around the part carrying shaft (200), said endpiece comprising facing the part carrying shaft (200), an inner frustoconical surface (212) which, by solicitation of the sheath (210) towards the front of the part carrying shaft (200), acts by pushing on the ball (211) in order to push this ball in the blind bore (201) of the part carrying shaft (200) towards a locking position.

3. Machine according to claim 2, **characterised in that** the clamping mechanism has several balls (221) and the part carrying shaft comprises several housings (202), with each housing (202) receiving a ball (211) and only one.

4. Machine according to claim 2 or claim 3, **characterised in that** the or each housing (202) is arranged as a counterbore.

5. Machine according to claim 2, **characterised in that** the mandrel (20) is provided with an elastic member (230) that acts on the part carrying shaft (200) and on the sheath (210) in order to urge the latter and the actuating endpiece (211) towards the front of the part carrying shaft (200) and consequently urge the or each ball (221) towards the locking position thereof.

6. Machine according to the preceding claim, **characterised in that** the elastic member (230) is a coil spring, mounted in the sheath (210) and engaged around the part carrying shaft (200), said spring being mounted in compression between an internal abutment surface (213) of the sheath and an external abutment surface (207) of the part carrying shaft (200).

7. Machine according to any of claims 2 to 6, **characterised in that** the sheath (210) comprises an internal rear abutment (214) and that the part carrying shaft (200), ahead of the internal abutment (214) of the sheath (210), comprises an external abutment surface (208) intended to receive bearing against the internal abutment surface of the sheath and to thus limit the movement of the sheath (210) towards the front of the shaft (200) under the effect of the action of the elastic member (230) .

8. Machine according to any of claims 2 to 7, **characterised by** a sealing bellows (240) engaged on the part carrying shaft (200) and is fixed in a sealed manner to the front portion of said shaft (200) and to the front portion of the actuating endpiece (211).

9. Machine according to any preceding claim, **characterised in that** the sheath (210) and the part carrying shaft (200) are immobilised in rotation with respect to one another.

10. Machine according to claims 2 and 9 taken together, **characterised in that** the actuating endpiece (211), in a manner offset with respect to the longitudinal geometrical axis of the part carrying mandrel (20), in the sheath (210), carries a an immobilising pin (260) in rotation and that the part carrying shaft (20) has a blind bore (261) that slidingly receives the immobilising pin.

11. Machine according to any preceding claim, **characterised by** a software abutment system that can detect the unclamping position of the clamping mechanism and that is able to produce a stop signal for the motor assembly (25) when said position is reached, in order to stop the progression towards the front of the part carrying shaft (200).

12. Machine according to any preceding claim, **characterised in that** the part carrying mandrel (20) is horizontal and that the rails (22) of the carriage (21) are horizontal, with the longitudinal geometrical axis of the part carrying mandrel (20) and the rails (22) being parallel.

13. Machine according to any preceding claim, **characterised in that** the part carrying mandrel can be oriented angularly by pivoting about the longitudinal geometrical axis thereof, said mandrel (20) being coupled to a means (24) for angular positioning and driving in rotation, carried by the carriage (21).

14. Machine according to any preceding claim, **characterised in that** the tool carrying spindle (14) is vertical and is moved in rotation about the vertical longitudinal geometrical axis thereof by a motor member (14a), said spindle being said motor member for driving being carried by a first carriage (13) movably mounted in translation along a horizontal geometrical axis on horizontal rails (15) carried by a second carriage (16) and able to be moved in translation according to the horizontal geometrical axis by a first motor assembly (18) integral with the second carriage (16), which is movably mounted in translation along a vertical geometrical axis on vertical rails (17) carried by the frame of the machine, with this second carriage (16) able to be moved in translation along said rails (17) by a second motor assembly (19) integral with the frame.

15. Machine according to any preceding claim, **characterised in that** the front portion of the part carrying mandrel (20) penetrates into the machining chamber via passage through a through-hole made in a wall (10a) fixed to the frame of said machine, and **in that** the fixed abutment surface (26) is formed by the periphery of the hole for the passage of the mandrel (20).
